# EUROPÄISCHE PATENTANMELDUNG

(11) **EP 2 362 163 A2**
(43) Veröffentlichungstag der Anmeldung: **31.08.2011**
(21) Anmeldenummer: 11000412.4
(22) Anmeldetag: 20.01.2011
(51) Int. Cl.: F24J 2/52

(54) **Tragkonstruktion für ein PV-Modul**

(30) Priorität: 19.02.2010 DE 102010008547
(71) Anmelder: Robert Bosch GmbH, 70469 Stuttgart (DE)
(72) Erfinder: Ludwig, Peter, 72072 Tübingen (DE)
(74) Vertreter: Maiß, Harald

(57) **Zusammenfassung**

Die Erfindung betrifft eine Tragkonstruktion (10) für ein PV-Modul (11) umfassend einen Mast (60), der sich im Wesentlichen in Richtung der Schwerkraft (S) erstreckt, einen ersten langgestreckten Querträger (20a), der sich quer zum Mast (60) in eine Querrichtung (Q) erstreckt und an diesem befestigt ist, einem zweiten langgestreckten Querträger (20b), der sich parallel beabstandet zum ersten Querträger (20a) angeordnet ist, und einen ersten und einen zweiten langgestreckten Modulträger (40a; 40b), die quer zu den Querträgern (20a; 20b) angeordnet und an diesen befestigt sind, wobei das PV-Modul (11) am ersten und am zweiten Modulträger (40a; 40b) befestigbar ist und wobei der zweite Querträger (20a; 20b) über wenigstens eine Strebe (80) am Mast (60) abgestützt ist.
Erfindungsgemäß weisen der erste und der zweite Modulträger (40a; 40b) je eine erste und eine zweite Aufnahmenut (43a; 43b) auf, wobei die erste und die zweite Aufnahmenut (43a; 43b) aufeinander zu weisen, so dass gegenüberliegende Ränder des PV-Moduls (11) in der ersten und der zweiten Aufnahmenut (43a; 43b) aufgenommen werden können, wobei der erste Querträger (20a) mit einer Seitenfläche (22) bezüglich der Querrichtung (Q) drehfest an einer Seitenfläche (64) des Mastes
(60) anliegt, wobei der erste und der zweite Modulträger (40a; 40b) an gegenüberliegenden Stirnflächen (23) des ersten Querträgers (20a; 20b) bezüglich der Querrichtung dreheinstellbar befestigt sind, derart, dass die beiden Aufnahmenuten (43a; 43b) bezüglich der Richtung der Schwerkraft (S) oberhalb des ersten Querträgers (20a) angeordnet sind.

## Beschreibung

Die Erfindung betrifft eine Tragkonstruktion für ein PV-Modul gemäß dem Oberbegriff von Anspruch 1. Ein PV-Modul ist eine plattenartige, rechteckige Baugruppe, die mehrere photovoltaische Zellen bzw. PV-Zellen umfasst, welche elektrisch zusammengeschaltet sind. Die vorliegende Erfindung betrifft hierbei insbesondere rahmenlose PV-Module, die wenigstens eine Glasplatte umfassen, auf der die photovoltaischen Zellen unmittelbar befestigt sind. Meist sind zwei Glasplatten vorgesehen, so dass die PV-Zellen geschützt zwischen den beiden Glasplatten angeordnet sind. Die PV-Zellen können hierbei auf gesonderten Siliziumwafern aufgebracht sein oder unmittelbar auf die Glasplatte. Im zweiten Fall spricht man auch von Dünnschichtzellen.

PV-Module, insbesondere solche mit Dünnschichtzellen, haben typischerweise eine geringe elektrische Leistung. Es kommt daher entscheidend darauf an, dass das PV-Modul und die Tragkonstruktion außerordentlich kostengünstig sind, damit sie wirtschaftlich Strom produzieren können. Die Kosten der Tragkonstruktion sind dabei insbesondere dann recht hoch, wenn ein Solarpark mit einer großen Zahl von PV-Modulen auf einem unebenen Untergrund, wie beispielsweise einer ehemaligen Müllhalde, errichtet werden soll. In diesem Fall muss zu einer sogenannten Einzelaufständerung gegriffen werden, bei der ein PV-Modul an einem einzigen Mast befestigt ist. Die große Anzahl an Masten, die im Erdboden verankert werden müssen, verursachen hierbei hohe Kosten.

Aus der DE 85 20 407 U ist eine Tragkonstruktion für PV-Module in Form einer Einzelaufständerung bekannt. Gemäß der Fig. 1 der DE 85 20 407 U umfasst die Tragkonstruktion einen Mast 1, der sich in Richtung der Schwerkraft erstreckt. An dem Mast ist ein erster Querträger 18 in Form eines kreiszylindrischen Rohres befestigt, das sich quer zum Mast in eine Querrichtung erstreckt. Parallel beabstandet zum ersten Querträger ist ein zweiter Querträger angeordnet, der ebenfalls in Form eines kreiszylindrischen Rohres ausgeführt ist. An den beiden Querträgern sind mehrere senkrecht zur Querrichtung angeordnete, parallele Modulträger 19 befestigt, welche die PV-Module 5 tragen. Der zweite Querträger ist über eine Strebe 2 in Form eines kreiszylindrischen Rohres fest mit dem Mast verbunden. Die Verbindung der Strebe mit dem zweiten Querträger bzw. dem Mast erfolgt mit Gerüstschellen 4, so dass die Neigung des PV-Moduls gegenüber der Sonne derart eingestellt werden kann, dass es die maximale Strommenge liefert.

Diese Tragkonstruktion ist teuer, weil der Mast ein Betonfundament benötigt. Weiter ist eine Vielzahl von teuren Verbindungsmitteln wie Gerüstschellen erforderlich.

Aus der DE 203 03 257 U1 ist eine Tragkonstruktion für PV-Module bekannt, bei der Masten in den Erdboden gerammt sind, so dass kein teures Betonfundament erforderlich ist.

Aus der DE 20 2009 004 217 U1 ist eine Tragkonstruktion bekannt, bei der rahmenlose PV-Module in Aufnahmennuten der Modulträger aufgenommen sind, so dass keine gesonderten Verbindungsmittel erforderlich sind.

Es ist Aufgabe der Erfindung, eine Tragkonstruktion gemäß dem Oberbegriff des Anspruchs 1 so weiterzubilden, dass diese besonders kostengünstig ist. Weiter soll die Tragkonstruktion so ausgebildet werden, dass benachbarte PV-Module mit möglichst geringem Abstand zueinander aufgestellt werden können, so dass auf einer vorgegebenen Stellfläche möglichst viele PV-Module aufgestellt werden können.

Gemäß dem Kennzeichenteil des Anspruchs 1 wird diese Aufgabe dadurch gelöst, dass der erste und der zweite Modulträger je eine erste und eine zweite Aufnahmenut aufweisen, wobei die erste und die zweite Aufnahmenut aufeinander zu weisen, so dass gegenüberliegende Ränder des PV-Moduls in der ersten und der zweiten Aufnahmenut aufgenommen werden können, wobei der erste Querträger mit einer Seitenfläche bezüglich der Querrichtung drehfest an einer Seitenfläche des Mastes anliegt, wobei der erste und der zweite Modulträger an gegenüberliegenden Stirnflächen des ersten Querträgers bezüglich der Querrichtung dreheinstellbar befestigt sind, derart, dass die beiden Aufnahmenuten bezüglich der Richtung der Schwerkraft oberhalb des ersten Querträgers angeordnet sind. Danach wird die an sich bekannte Aufnahmenut für rahmenlose PV-Module aufgegriffen, wobei die verbleibende Tragkonstruktion besonders an dieses Konstruktionsmerkmal angepasst wird. Hierbei wird insbesondere die Drehverstellbarkeit des PV-Moduls gegenüber dem oberen Querträger durch die stirnseitige Befestigung der Modulträger an dem ersten Querträger gelöst. Die entsprechende Stirnfläche des ersten Querträgers ist dabei vorzugsweise eben ausgeführt und senkrecht zur Querrichtung angeordnet, damit der Querträger und der Modulträger in jeder beliebigen Drehstellung bezüglich der Querachse aneinander befestigt werden können. Die Befestigung kann beispielsweise mit einem einzigen Schraubbolzen auf besonders kostengünstige Weise erfolgen. Der Modulträger liegt dabei vorzugsweise unmittelbar mit einer Seitenfläche an dem ersten Querträger an. Es kann aber auch ein gesondertes Verbindungsteil, beispielsweise ein Blechwinkel, zwischen dem Modulträger und dem ersten Querträger vorgesehen sein. Durch die stirnseitige Befestigung der Modulträger an den Querträgern ist außerdem sichergestellt, dass die Querträger seitlich nicht über die PV-Module überstehen, so dass benachbarte PV-Module besonders nahe nebeneinander aufgestellt werden können. Aufgrund der vorstehenden Verbindung ist es nicht mehr erforderlich, dass der erste Querträger dreheinstellbar am Mast befestigt ist. Er kann daher einfach mit einer Seitenfläche an einer Seitenfläche des Mastes anliegen, wobei die beiden Teile vorzugsweise verschraubt sind. Die Aufnahmenut für das PV-Modul muss oberhalb des ersten Querträgers angeordnet sein, damit diese durch den ersten Querträger nicht versperrt wird.

In den abhängigen Ansprüchen sind vorteilhafte Weiterbildungen und Verbesserungen der Erfindung angegeben.

Bei einer bevorzugten Tragkonstruktion sind der erste und der zweite Modulträger an gegenüberliegenden Stirnflächen des zweiten Querträgers bezüglich der Querrichtung dreheinstellbar befestigt, derart, dass die beiden Aufnahmenuten bezüglich der Richtung der Schwerkraft oberhalb des zweiten Querträgers angeordnet sind, wobei der zweite Querträger über die Strebe bezüglich der Querrichtung drehfest mit dem Mast verbunden ist. Danach wird das beim ersten Querträger bereits angewandte Konstruktionsprinzip auf den zweiten Querträger übertragen, so dass auch dort die oben genannten Vorteile gegeben sind.

Bei einer bevorzugten Tragkonstruktion ist der Mast aus einem Metallblech gebogen, wobei seine Querschnittsform mehrfach abgewinkelt ist, so dass der Mast in den Erdboden gerammt werden kann. Bei dieser Ausführungsform wird der an sich bekannte in den Erdboden gerammte Mast aufgegriffen, um Kosten zu sparen. Die erfindungsgemäße Tragkonstruktion gemäß dem selbständigen Anspruch lässt sich auf besonders kostengünstige Weise mit einem derartigen Masten verbinden, weil zwischen dem ersten Querträger und dem Mast keine Drehverstellbarkeit erforderlich ist. Die genannten Teile können einfach mit ebenen Flächen aneinander angelegt und miteinander verbunden, insbesondere verschraubt, werden.

Bei einer bevorzugten Tragkonstruktion weist der erste und/oder der zweite Querträger entlang der Querrichtung eine im Wesentlichen konstante Querschnittsform mit einem Hohlraum auf, wobei die Verbindung des ersten bzw. des zweiten Modulträgers mit dem zugeordneten ersten bzw. zweiten Querträger über einen einzigen Schraubbolzen erfolgt, der in den Hohlraum eingeschraubt ist, wobei er den Modulträger durchsetzt. Die vorgeschlagenen Querträger können besonders kostengünstig aus Aluminium im Strangpressverfahren hergestellt werden. Die stranggepressten Rohteile müssen nur auf die passende Länge abgeschnitten werden, um den einbaufertigen Querträger zu erhalten. Bei den Schraubbolzen handelt es sich vorzugsweise um eine selbstschneidende Ausführungsform, damit der Hohlraum nicht in einem gesonderten Arbeitsgang mit einem Gewinde versehen werden muss. Die erste und die zweite Querstrebe sind vorzugsweise mit einer an sich bekannten hinterschnittenen, insbesondere T-förmigen Nut versehen, damit sie kostengünstig mit dem Mast bzw. der Strebe verbunden werden können.

Bei einer bevorzugten Tragkonstruktion ist die Strebe in Form eines langgestreckten Profilkörpers ausgeführt, der mehrfach, vorzugsweise vier mal, umgebogen ist, wobei die beiden Enden des Profilkörpers mit dem zweiten Querträger verbunden sind und wobei der mittlere Bereich des Profilkörpers mit dem Mast verbunden ist. Bei dem langgestreckten Profilkörper handelt ist sich vorzugsweise um einen Stahlstab, der beispielsweise mittels Walzen hergestellt wurde. Ein derartiger Profilkörper kann besonders einfach mit den erforderlichen Biegungen versehen werden. Die vorgeschlagene Strebe ist besonders kostengünstig, da sie mit wenigen Bearbeitungsschritten aus einem marktgängigen Rohteil hergestellt werden kann. Gleichzeitig wird der zweite Querträger mit einem einzigen Bauteil an zwei Stellen stabil abgestützt.

Bei einer besonders bevorzugten Tragkonstruktion weist der Profilkörper eine im Wesentlichen rechteckige Querschnittsform auf, wobei die Biegelinien der Umbiegungen in den Seitenflächen des Profilkörpers liegen, die durch die lange Rechteckseite der Querschnittsform definiert werden. Stahlprofile mit rechteckiger Querschnittsform werden am Markt besonders kostengünstig angeboten, da sie einfach herzustellen sind und häufig verwendet werden. Die vorgeschlagenen Biegungen können besonders einfach hergestellt werden. Die ebenen Seitenflächen des Profilkörpers können besonders einfach am Mast und am zweiten Querträger befestigt werden.

Bei einer bevorzugten Tragkonstruktion weisen der erste und der zweite Modulträger eine konstante Querschnittsform auf, die entlang einer Leitlinie mit einer im Wesentlichen konstanten Breite ausgeführt ist, wobei die Leitlinie mehrfach abgewinkelt ist, um die Aufnahmenut zu bilden. Ein derartiger Modulträger kann besonders kostengünstig aus Aluminium im Strangpressverfahren hergestellt werden. Alternativ kann er auch als Blechbiegeteil gefertigt werden. Die vorgeschlagene Querschnittsform ist besonders Material sparend, wobei sie gleichzeitig die erforderliche Steifigkeit aufweist, um die PV-Module sicher zu tragen.

Bei einer besonders bevorzugten Tragkonstruktion weist die Leitlinie einen geraden Abschnitt auf, der länger als die größte Querschnittsabmessung des ersten und des zweiten Querträgers ist, wobei die durch den genannten geraden Abschnitt definierte Anlagefläche des ersten bzw. des zweiten Modulträgers unmittelbar an der zugeordneten Stirnfläche des ersten bzw. des zweiten Querträgers anliegt. Damit ist die Anlagefläche so breit, dass die Modulträger in jede beliebige Stellung gedreht werden können, ohne dass die Gefahr besteht, dass sie in die Aufnahmenut hineinragen.

Bei einer besonders bevorzugten Tragkonstruktion ist in der ersten und/oder der zweiten Aufnahmenut ein Anschlag für das PV-Modul angeordnet, wobei der Anschlag einstückig mit dem zugeordneten Modulträger ausgebildet ist. Der genannte Anschlag wird vorzugsweise aus dem Modulträger, der eine geringe Wanddicke aufweist, ausgestanzt und um 90° umgebogen. Da die Modulträger in großer Anzahl benötigt werden, kann dieser Arbeitsgang mit einem besonders angepassten Werkzeug kostengünstig ausgeführt werden.

Bei einer bevorzugten Tragkonstruktion schließt der Mast im Wesentlichen bündig mit dem ersten Querträger nach oben ab. Damit ist ausgeschlossen, dass der Mast bei der Neigungseinstellung der Tragkonstruktion mit dem PV-Modul kollidiert.

Die Erfindung wird im Folgenden anhand der beigefügten Zeichnungen näher erläutert. Es stellt dar:
- Fig. 1: eine perspektivische Ansicht einer erfindungsgemäßen Tragkonstruktion;
- Fig. 2: eine Draufsicht des Mastes mit angeschraubtem erstem Querträger;
- Fig. 3: eine Vorderansicht eines Modulträgers mit eingesetztem PV-Modul und angeschraubtem Querträger; und
- Fig. 4: einen Teilschnitt eines Modulträgers im Bereich eines Anschlags.

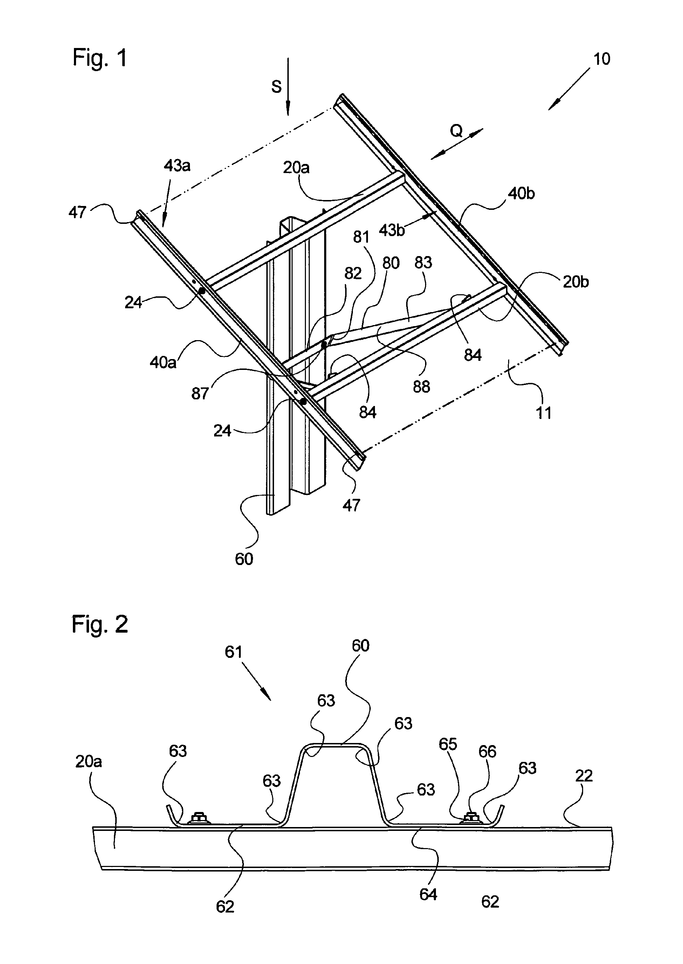

Fig. 1 zeigt eine perspektivische Ansicht einer erfindungsgemäßen Tragkonstruktion 10. Das PV-Modul 11, welches an der Tragkonstruktion 10 befestigt ist, ist durch eine Strichzweipunktlinie angedeutet. Die Tragkonstruktion 10 umfasst einen Mast 60 in Form eines mehrfach gebogenen Metallblechs. Der Mast 60 erstreckt sich in Richtung der Schwerkraft S und ist in den (nicht dargestellten) Erdboden gerammt. An dem Mast 60 ist ein erster Querträger 20a befestigt, der unmittelbar an diesem anliegt, wobei der Mast 60 nach oben bündig mit dem ersten Querträger 20a abschließt. Der erste Querträger 20a ist in Form eines Aluminiumstrangpressprofils ausgeführt, welches sich quer zum Mast in eine Querrichtung Q erstreckt. Parallel beabstandet zum ersten Querträger 20a ist ein zweiter Querträger 20b vorgesehen, der identisch zum ersten Querträger 20a ausgeführt ist.

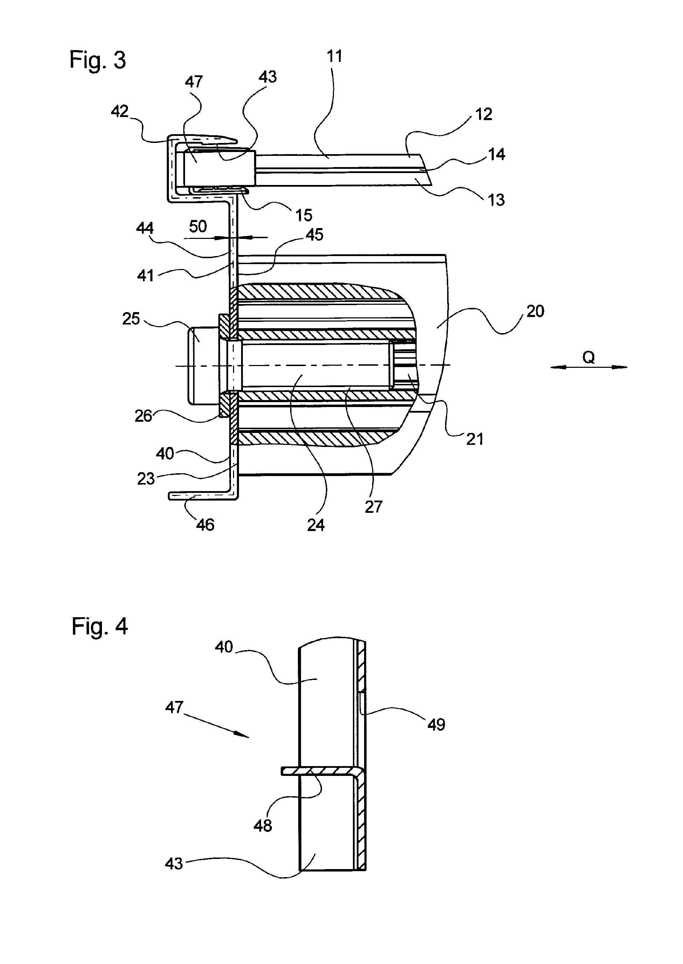

An den gegenüberliegenden Stirnflächen des ersten und des zweiten Querträgers 20a; 20b sind je ein erster und ein zweiter Modulträger 40a; 40b befestigt. Die beiden Modulträger 40a; 40b sind rechtwinklig zur Querrichtung Q angeordnet. Sie sind mit einer ersten und einer zweiten Aufnahmenut 43a; 43b versehen, die aufeinander zu weisen, wobei gegenüberliegende Ränder des PV-Moduls 11 in den genannten Aufnahmenuten 43a; 43b aufgenommen sind. An den beiden Endbereichen einer Aufnahmenut 43a; 43b ist je ein Anschlag 47 vorgesehen, mit dem das PV-Modul 11 in der Aufnahmenut 43a; 43b gehalten wird. Die Anschläge 47 werden mit Bezug auf Fig. 3 und 4 noch näher erläutert.

Weiter ist eine Strebe 80 vorgesehen, mit der der zweite Querträger 20b am Mast 60 abgestützt ist. Die Strebe 80 besteht aus einem Stahlstab mit rechteckiger Querschnittsform. Der Stahlstab ist mit insgesamt vier Biegungen versehen, deren Biegelinie 81 in der Seitenfläche der Strebe 80 liegt, die durch die lange Rechteckseite der Querschnittsform definiert wird. Durch die Biegungen wird die Strebe 80 in einen mittleren Bereich 82, zwei Strebenbereiche 83 und zwei Endbereiche 84 unterteilt. Der mittlere Bereich 82 ist über zwei Schraubbolzen 87 mit dem Mast 60 verschraubt. Die Höhenlage der genannten Schraubbolzen 87 am Mast 60 bestimmt die Neigung des PV-Moduls 11, welche so eingestellt wird, dass das PV-Modul 11 die größtmögliche Strommenge liefert. Die beiden Endbereiche 84 sind mittels je einer (nicht dargestellten) Hammerschraube mit dem zweiten Querträger 20b verschraubt. Der zweite Querträger 20b ist hierfür mit einer hinterschnittenen, T-förmigen Nut versehen, in welche die Hammerschraube formschlüssig eingreift. Die besondere Biegekonstruktion der Strebe 80 hat zur Folge, dass sich der erste und der zweite Querträger 20a; 20b bezüglich der Querrichtung Q nicht in derselben Drehstellung befinden. Dies ist aber unschädlich, da beide Querträger 20a; 20b dreheinstellbar mit den zugeordneten Modulträgern 40a; 40b verbunden sind.

Fig. 2 zeigt eine Draufsicht des Mastes 60 mit angeschraubtem erstem Querträger 20a. Der Mast 60 besteht aus einem Stahlblech, das mit insgesamt sechs parallelen Biegungen 63 versehen ist. Durch die Biegungen wird ein insgesamt U-förmiger Mittelbereich 61 bereitgestellt, der dem Mast 60 die notwendige Biegesteifigkeit verleiht. Die beiden ebenen Seitenbereiche 62 dienen zur Befestigung des ersten Querträgers 20a und der Strebe (Fig. 1; Nr. 80). Der erste Querträger 20a liegt mit einer ebenen Seitenfläche 22 an der durch die ebenen Seitenbereiche 62 des Mastes 60 definierten Seitenfläche 64 an. Das Querschnittsprofil des ersten Querträgers 20a ist an der genannten Seitenfläche 22 mit einer (nicht dargestellten) hinterschnittenen, T-förmigen Nut versehen. In diese Nut greift eine Hammerschraube 66 ein, die den Mast 60 durchsetzt, wobei der Mast 60 durch die Mutter 65 geklemmt wird.

Fig. 3 zeigt eine Vorderansicht eines Modulträgers 40 mit eingesetztem PV-Modul 11 und angeschraubtem Querträger 20. Der erste und der zweite Modulträger 40a; 40b sind spiegelsymmetrisch ausgeführt, so dass die nachfolgenden Ausführungen für beide Modulträger 40 gelten.

Bei dem PV-Modul 11 handelt es sich um eine rahmenlose Ausführungsform bestehend aus einer ersten und einer zweiten ebenen, rechteckigen Glasplatte 12; 13, zwischen denen die aktive Schicht 14 mit den photovoltaischen Zellen geschützt angeordnet ist. Das PV-Modul 11 ist in einer Aufnahmenut 43 des Modulträgers 40 aufgenommen, wobei zwischen der Aufnahmenut 43 und dem PV-Modul 11 eine U-förmige, elastische Kunststoffeinlage 15 angeordnet ist. Die Kunststoffeinlage 15 stellt sicher, dass das PV-Modul 11 spielfrei in der Aufnahmenut 43 gehalten wird, auch wenn Windlasten o.ä. auf dieses einwirken. Darüber hinaus werden durch die Kunststoffeinlage 15 Montageverspannungen, die auf das PV-Modul 11 einwirken, minimiert. Stirnseitig wird das PV-Modul 11 durch einen Anschlag 47 in der zugeordneten Aufnahmenut 43 gehalten, wobei an jeder Ecke des PV-Moduls 11 ein derartiger Anschlag 47 vorgesehen ist, der mit Bezug auf Fig. 4 noch näher beschrieben wird.

Der Modulträger 40 wird aus Aluminium im Strangpressverfahren hergestellt. Die Querschnittsform ist hierbei auf geringen Materialverbrauch hin optimiert, wobei sie entlang einer Leitlinie 41 eine im Wesentlichen konstante Breite 50 aufweist. Die Leitlinie weist mehrere 90°-Winkel 42 auf, um die Aufnahmenut 43, einen Versteifungsschenkel 46 und einen geraden Abschnitt 44 zu bilden. An der durch den geraden Abschnitt 44 definierten ebenen Anlagefläche 45 liegt der Querträger 20 mit einer ebenen Stirnfläche 23 an. Die Länge des geraden Abschnitts 44 ist hierbei so groß gewählt, dass der Querträger 20 unabhängig von seiner Drehstellung bezüglich der Querrichtung Q nie in die Aufnahmenut 43 hineinragen kann.

Der Querträger 20 ist ebenfalls aus Aluminium im Strangpressverfahren hergestellt. Er besitzt eine insgesamt quadratische Querschnittsform, in deren Mitte ein Hohlraum 21 vorgesehen ist. In den Hohlraum 21 ist ein Schraubbolzen 24 mit einem selbstschneidenden Gewinde 27 eingeschraubt, der den Modulträger 40 durchsetzt. Auf diese Weise kann die Drehstellung des Modulträgers 40 bezüglich der Querrichtung Q beliebig eingestellt werden. Die problemlose Verstellbarkeit wird durch eine Unterlegscheibe 26 zwischen dem Kopf des Schraubbolzens 24 und dem Modulträger 40 unterstützt.

Fig. 4 zeigt einen Teilschnitt eines Modulträgers 40 im Bereich eines Anschlags 47. Der Anschlag 47 wird aus dem Modulträger 40 herausgestanzt, so dass ein rechteckiger Durchbruch 49 im Modulträger 40 entsteht und zwar am Nutgrund der Aufnahmenut 43. Die hierdurch entstehende Lasche 48 ist nur noch an einer Seite einstückig mit dem Modulträger 40 verbunden, wobei sie an dieser Stelle um 90° umgebogen wird, so dass sie in die Aufnahmenut 43 hineinragt.

### Bezugszeichenliste

- S: Schwerkraftrichtung
- Q: Querrichtung

- 10: Tragkonstruktion
- 11: PV-Modul
- 12: erste Glasplatte
- 13: zweite Glasplatte
- 14: aktive Schicht
- 15: Kunststoffeinlage

- 20a: erster Querträger
- 20b: zweiter Querträger
- 21: Hohlraum
- 22: Seitenfläche
- 23: Stirnfläche
- 24: Schraubbolzen
- 25: Kopf
- 26: Unterlegscheibe
- 27: selbstschneidendes Gewinde

- 40a: erster Modulträger
- 40b: zweiter Modulträger
- 41: Leitlinie
- 42: Winkel
- 43a: erste Aufnahmenut
- 43b: zweite Aufnahmenut
- 44: gerader Abschnitt
- 45: Anlagefläche
- 46: Versteifungsschenkel
- 47: Anschlag

- 48: Lasche
- 49: rechteckiger Durchbruch
- 50: Breite

- 60: Mast
- 61: Mittelbereich
- 62: Seitenbereich
- 63: Biegung
- 64: Seitenfläche
- 65: Mutter
- 66: Hammerschraube

- 80: Strebe
- 81: Biegelinie
- 82: mittlerer Bereich
- 83: Strebenbereich
- 84: Endbereich
- 87: Schraubbolzen
- 88: Profilkörper

## Patentansprüche

1. Tragkonstruktion (10) für ein PV-Modul (11) umfassend einen Mast (60), der sich im Wesentlichen in Richtung der Schwerkraft (S) erstreckt, einen ersten langgestreckten Querträger (20a), der sich quer zum Mast (60) in eine Querrichtung (Q) erstreckt und an diesem befestigt ist, einem zweiten langgestreckten Querträger (20b), der sich parallel beabstandet zum ersten Querträger (20a) angeordnet ist, und einen ersten und einen zweiten langgestreckten Modulträger (40a; 40b), die quer zu den Querträgern (20a; 20b) angeordnet und an diesen befestigt sind, wobei das PV-Modul (11) am ersten und am zweiten Modulträger (40a; 40b) befestigbar ist und wobei der zweite Querträger (20a; 20b) über wenigstens eine Strebe (80) am Mast (60) abgestützt ist,
**dadurch gekennzeichnet, dass** der erste und der zweite Modulträger (40a;
40b) je eine erste und eine zweite Aufnahmenut (43a; 43b) aufweisen, wobei die erste und die zweite Aufnahmenut (43a; 43b) aufeinander zu weisen, so dass gegenüberliegende Ränder des PV-Moduls (11) in der ersten und der zweiten Aufnahmenut (43a; 43b) aufgenommen werden können, wobei der erste Querträger (20a) mit einer Seitenfläche (22) bezüglich der Querrichtung (Q) drehfest an einer Seitenfläche (64) des Mastes (60) anliegt, wobei der erste und der zweite Modulträger (40a; 40b) an gegenüberliegenden Stirnflächen (23) des ersten Querträgers (20a; 20b) bezüglich der Querrichtung dreheinstellbar befestigt sind, derart, dass die beiden Aufnahmenuten (43a; 43b) bezüglich der Richtung der Schwerkraft (S) oberhalb des ersten Querträgers (20a) angeordnet sind.

2. Tragkonstruktion nach Anspruch 1,
**dadurch gekennzeichnet, dass** der erste und der zweite Modulträger (40a;
40b) an gegenüberliegenden Stirnflächen (23) des zweiten Querträgers (20b) bezüglich der Querrichtung (Q) dreheinstellbar befestigt sind, derart, dass die beiden Aufnahmenuten (43a; 43b) bezüglich der Richtung der Schwerkraft (S) oberhalb des zweiten Querträgers (20b) angeordnet sind, wobei der zweite Querträger (20b) über die Strebe (80) bezüglich der Querrichtung (Q) drehfest mit dem Mast (60) verbunden ist.

3. Tragkonstruktion nach einem der vorstehenden Ansprüche,
**dadurch gekennzeichnet, dass** der Mast (60) aus einem Metallblech gebogen ist, wobei seine Querschnittsform mehrfach abgewinkelt ist, so dass der Mast (60) in den Erdboden gerammt werden kann.

4. Tragkonstruktion nach einem der vorstehenden Ansprüche,
**dadurch gekennzeichnet, dass** der erste und/oder der zweite Querträger (20a; 20b) entlang der Querrichtung (Q) eine im Wesentlichen konstante Querschnittsform mit einem Hohlraum (21) aufweist, wobei die Verbindung des ersten bzw. des zweiten Modulträgers (40a; 40b) mit dem zugeordneten ersten bzw. zweiten Querträger (20a; 20b) über einen einzigen Schraubbolzen (24) erfolgt, der in den Hohlraum (21) eingeschraubt ist, wobei er den Modulträger (40a; 40b) durchsetzt.

5. Tragkonstruktion nach einem der vorstehenden Ansprüche,
**dadurch gekennzeichnet, dass** die Strebe (80) in Form eines langgestreckten Profilkörpers (88) ausgeführt ist, der mehrfach, vorzugsweise vier mal, umgebogen (81) ist, wobei die beiden Enden (84) des Profilkörpers (88) mit dem zweiten Querträger (20b) verbunden sind und wobei der mittlere Bereich (82) des Profilkörpers (88) mit dem Mast (60) verbunden ist.

6. Tragkonstruktion nach Anspruch 5,
**dadurch gekennzeichnet, dass** der Profilkörper (88) eine im Wesentlichen rechteckige Querschnittsform aufweist, wobei die Biegelinien (81) der Umbiegungen in den Seitenflächen des Profilkörpers (88) liegen, die durch die lange Rechteckseite der Querschnittsform definiert werden.

7. Tragkonstruktion nach einem der vorstehenden Ansprüche,
**dadurch gekennzeichnet, dass** der erste und der zweite Modulträger (40a;
40b) eine konstante Querschnittsform aufweisen, die entlang einer Leitlinie (41) mit einer im Wesentlichen konstanten Breite (50) ausgeführt ist, wobei die Leitlinie (41) mehrfach abgewinkelt ist, um die Aufnahmenut (43) zu bilden.

8. Tragkonstruktion nach Anspruch 7,
**dadurch gekennzeichnet, dass** die Leitlinie (41) einen geraden Abschnitt (44) aufweist, der länger als die größte Querschnittsabmessung des ersten und des zweiten Querträgers (43a; 43b) ist, wobei die durch den genannten geraden Abschnitt (44) definierte Anlagefläche (45) des ersten bzw. des zweiten Modulträgers (40a; 40b) unmittelbar an der zugeordneten Stirnfläche (23) des ersten bzw. des zweiten Querträgers (20a; 20b) anliegt.

9. Tragkonstruktion nach Anspruch 7 oder 8,
**dadurch gekennzeichnet, dass** in der ersten und/oder der zweiten Aufnahmenut (43a; 43b) wenigstens ein Anschlag (47) für das PV-Modul (11) angeordnet ist, wobei der Anschlag (47) einstückig mit dem zugeordneten Modulträger (40a; 40b) ausgebildet ist.

10. Tragkonstruktion nach einem der vorstehenden Ansprüche,
**dadurch gekennzeichnet, dass** der Mast (60) im Wesentlichen bündig mit dem ersten Querträger (20a) nach oben abschließt.
